Europäisches Patentamt

European Patent Office

Office européen des brevets

(19)

(11) Publication number: **0 028 989**

**B1**

(12) **EUROPEAN PATENT SPECIFICATION**

(45) Date of publication of patent specification: **04.07.84**

(51) Int. Cl.³: **F 16 D 51/24, F 16 D 65/24**

(21) Application number: **80401628.5**

(22) Date of filing: **13.11.80**

(54) **Drum brake.**

(30) Priority: **13.11.79 US 93361**

(43) Date of publication of application:
**20.05.81 Bulletin 81/20**

(45) Publication of the grant of the patent:
**04.07.84 Bulletin 84/27**

(84) Designated Contracting States:
**DE FR GB IT**

(56) References cited:
**FR - A - 1 388 321**
**GB - A - 606 342**
**GB - A - 1 230 653**
**GB - A - 1 250 141**
**GB - A - 2 015 097**
**US - A - 1 362 372**
**US - A - 2 247 374**
**US - A - 2 257 628**
**US - A - 3 599 762**
**US - A - 3 958 674**

(73) Proprietor: **THE BENDIX CORPORATION**
**Executive Offices Bendix Center**
**Southfield Michigan 48037 (US)**

(72) Inventor: **Roberts, James K.**
**2228 Portage Avenue**
**South Bend Indiana 46616 (US)**

(74) Representative: **Brullé, Jean et al,**
**Service Brevets Bendix 44, rue François 1er**
**F-75008 Paris (FR)**

Courier Press, Leamington Spa, England.

## Description

The invention relates to a drum brake incorporating a new wheel cylinder and a torque plage construction.

A wheel cylinder is commonly produced by casting which requires a number of machining operations and is expensive. The cylinder is also quite heavy. The cylinder is then affixed to a backing plate which is affixed to a rear axle housing of a vehicle. The backing plate is usually stamped (GB—A—606.342).

It is, therefore, a principal object of the invention to provide an improved wheel cylinder construction from drum brakes which is lighter in weight and involves fewer machining operations.

To this end, the invention proposes a drum brake with a wheel cylinder and torque plate combination wherein the wheel cylinder is adapted to receive fluid presure during braking to impart movement to at least one piston, the combination comprising two stamped torque plate parts each part having a central planar portion to be fixed to the other planar portion and to a wheel axle housing or the like, each part also having integrally formed matching shells which form a complete cylindrical shell when assembled together, and a member having a cylindrical bore therethrough mounted in the assembled parts, characterized in that said member is formed of plastics material and is substantially enclosed within and contiguously engaging said complete cylindrical shell to prevent expansion of said member when fluid pressure is communicated to the wheel cylinder, and said wheel cylinder is solely defined by said member and said torque plate parts.

The present invention provides a wheel cylinder for a drum brake which is made of a plastic cylindrical member molded in a steel shell. The steel shell constitutes part of the mold and also backs up the plastic cylindrical member in the pressurized area so that the maximum pressure is not limited by the strength of the plastic material. Such a wheel cylinder is lighter in weight and eliminates a number of machining operations.

The steel shell of the wheel cylinder can be structurally integral with a torque plate. The torque plate can be made of two substantially identical parts which can be stamped and then suitably affixed together. Such a construction also is lighter in weight than conventional torque plates and can be used with a thin, light-weight dust or splash shield. The two torque plate parts can have semi-cylindrical shells which form the wheel cylinder shell when assembled.

Many other objects and advantages of the invention will be apparent from the following detailed description of preferred embodiments thereof, reference being made to the accompanying drawings, wherein:

— Figure 1 is a schematic front view in elevation of a drum brake with the front of the brake drum eliminated;

— Figure 2 is a schematic view in transverse cross section, taken along the line 2—2 of Figure 1, and showing the whole brake drum;

— Figure 3 is an exploded view in perspective showing two parts forming a torque plate for the drum brake;

— Figure 4 is an enlarged view in transverse cross section taken generally centrally through a wheel cylinder of a drum brake;

— Figure 5 is a view in vertical, longitudinal cross section of the wheel cylinder; and

— Figure 6 is a further enlarged fragmentary view showing a modification of part of the wheel cylinder.

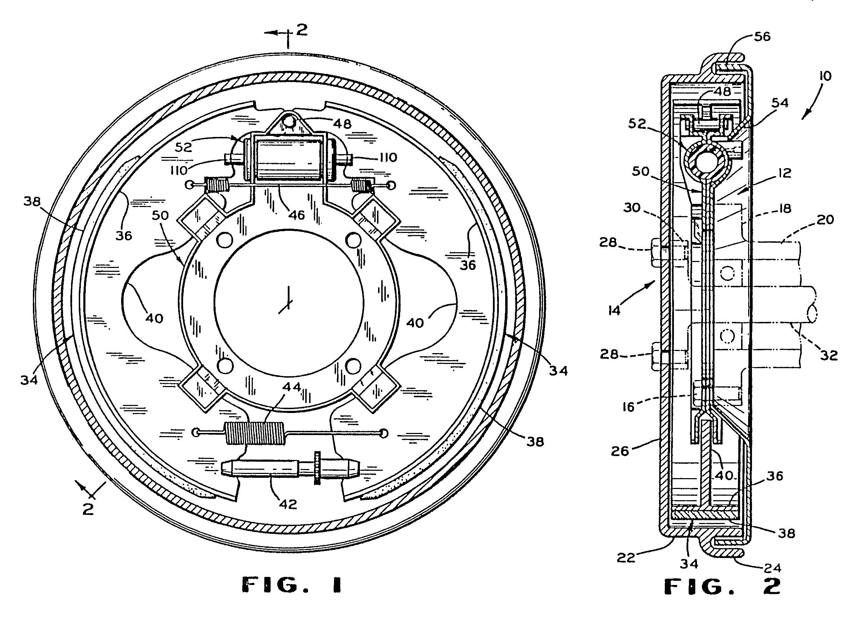

Referring to Figures 1 and 2, a drum brake indicated at 10 is shown for purposes of illustration of the invention and is schematic, with components omitted. The brake includes a stationary assembly 12 and a brake drum 14. The stationary assembly is suitably affixed by bolts 16 or the like to a stationary portion of a vehicle, such as a flange 18 of a rear axle housing 20. The brake drum 14 has an outer cylindrical member 22 with an annular flange 24 and a circular front 26 which is affixed by bolts 28 or the like to a rotating portion of the vehicle, such as a wheel flange 30 of a drive axle 32. The specific drum brake design does not constitute part of the invention.

The stationary assembly 12 includes brake shoes 34 having arcuate portions 36 to which friction linings 38 are affixed. The shoes also have inwardly-extending webs 40 which are perpendicular to the arcuate portions and provide rigidity therefor. The brake shoes have a suitable adjuster 42 and are connected by springs 44 and 46. The brake shoe adjusting system 42 can be of the type shown in U.S. Patent 3 958 674, for example. One of the brake shoes 38 is backed up by an anchor pin 48, depending upon the direction of rotation of the brake drum 14, when the brakes are applied. The stationary assembly 12 also includes a torque plate 50 which holds the anchor pin 48 and a wheel cylinder 52 which moves the brake shoes 38 against the cylindrical member 22 of the brake drum 14. The torque plate and wheel cylinder are constructed in accordance with the invention.

Since the torque plate 50 transmits torque from the brake shoes 38 to the rear axle housing 20, only a thin, light-weight dust or splash shield 54 needs to be employed with the stationary assembly 12. The shield 54 has an outer cylindrical flange 56 which extends between the brake drum member 22 and the flange 24 and serves as protection against water, dust, and other contaminants.

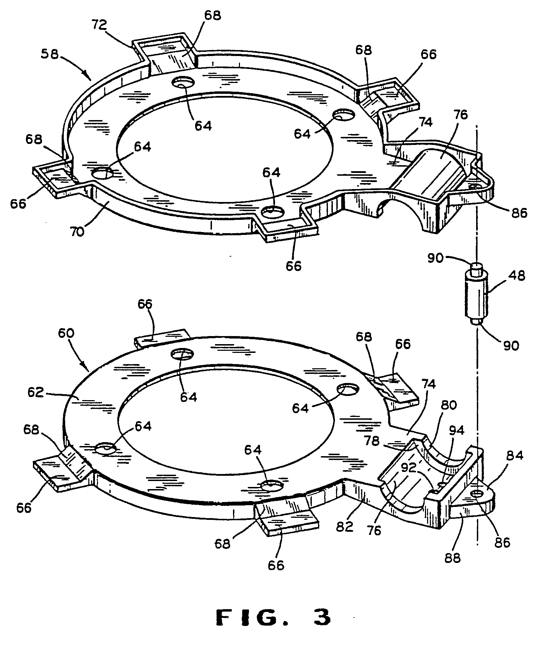

Referring now to Figure 3, the torque plate 50 includes a front stamped part 58 and a rear stamped part 60 which are substantially identical and which are affixed together by spot welding or riveting, by way of example. The front part 58 has a circular planar portion 62 with spaced bolt holes 64 for the bolts 16 to affix the torque plate to the flange therebetween. Several ears 66 are set off from the plane of the circular portion 62, away from the rear part 60, by offsets 68. The ears 66 extend along the sides of the brake shoe webs 40 (Figures 1 and 2) to provide a guide for the expansion of the webs. Suitable stiffening flanges 70 extend outwardly from the planar circular portion 62 with U-shaped stiffening flanges 72 being located around the ears 66. The front part 58 also has an extension 74 extending radially outwardly and terminating in a semi-cylindrical shell 76. The shell has a semi-circular end wall 78 terminating in a short semi-cylindrical web 80. A U-shaped stiffening flange 82 extends around the shell 76 with an outer edge terminating in an ear 84 with a hole 86 centrally located therein and an extension flange 88 extending therefrom. The hole 86 receives a reduced end 90 of the anchor pin 48 with the reduced end peened over or welded to the ear.

The rear stamped part 60 of the torque plate 50 is substantially identical to the front stamped part 58 except for two nipples 92 and 94 which extend outwardly from the semi-cylindrical shell 76 thereof. These will be discussed in more detail subsequently.

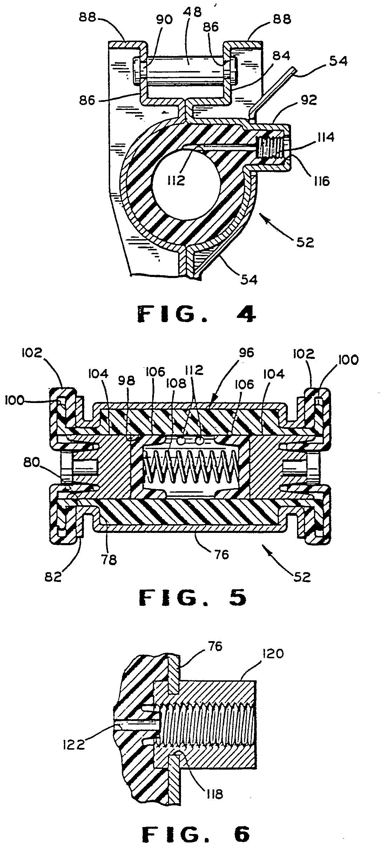

When the torque plate parts 58 and 60 are assembled, the semi-cylindrical shells 76 match to form a complete shell and are placed in a mold or die which extends beyond the ends of the shell and is also provided with a suitable cylindrical core. Plastic is then injected into the mold to form a plastic cylindrical member 96 (Figures 4—6) with a cylindrical inner surface or bore 98 and circular end flanges 100 formed by the mold and positioned beyond the stiffening flanges 82 of the shell 76. Conventional rubber sealing boots 102 can then be mounted on the flanges 100 to seal the ends of the cylinder 52. The boots 102 also cooperate with conventional metal pistons 104 having inner ends engaged by rubber cup seals 106 which are urged outwardly by a spring 108.

When brake fluid under pressure is supplied to the interior to the plastic cylindrical member 96, the cup seals 106 are urged outwardly to move the metal pistons 104 outwardly and thereby move the brake shoes 34 outwardly through pins 110 (Figure 1). When the pressure in the cylinder 96 is released, the returning springs 44 and 46 move the brake shoes 34 toward one another away from the brake drum 14 and urge the pistons 104 and the seals 106 inwardly. The central portion of the plastic cylindrical member 96 to which pressure is applied is backed up by the metal shells 76 so that the maximum brake fluid pressure is not limited by the strength of the plastic material.

Two substantially tangential passages 112 are formed in the plastic cylindrical member 96 and communicate with the interior thereof, within the surface 98. One of these passages supplies the brake fluid under pressure to the wheel cylinder 52 and the other provides a vent or bleed for bleeding air from the cylinder. The passages 112 communicate with threaded recesses 114 formed in the plastic material adjacent openings 116 in the nipples 92 and 94. Suitable fittings can be threaded through the openings 116 into the threaded recesses 114 to connect the cylinder with the brake fluid and bleed lines.

An alternative nipple arrangement for connecting the wheel cylinder with fittings is shown in Figure 6. In this instance the shell 76 has flush openings 118 located in generally similar positions to the nipples 92 and 94. A threaded connector 120 has a small end inserted through the opening 118 and peened over to provide a mechanical connection between the connector and the shell. This is done prior to molding. Suitable passages 122 similar to the passages 112 are then formed in the plastic material after a suitable plug is removed from the threaded connector 120 after the molding operation is complete.

From the above, it will be seen that the wheel cylinder and the torque plate require minimum machining operations as compared to the cast members heretofore employed. Also, the weight of the wheel cylinder and the torque plate is also substantially less than the cast components heretofore employed. The assembly operation of the drum brake components is also reduced when the wheel cylinder and the torque plate are made as one unit. The symmetrical arrangement of the torque plate in mounting the anchor pin also provides a better distribution of forces from the anchor pin to the axle housing flange.

## Claims

1. A drum brake with a wheel cylinder (52) and torque plate (50) combination wherein the wheel cylinder (52) is adapted to receive fluid pressure during braking to impart movement to at least one piston, the combination comprising two stamped torque plate parts (58, 60) each part having a central planar portion (62) to be fixed to the other planar portion and to a wheel axle housing or the like, each part also having integrally formed matching shells (76) which form a complete cylindrical shell when assembled together, and a member (96) having a cylindrical bore (98) therethrough mounted in the assembled parts, characterized in that said member (96) is formed of plastics material and is substantially enclosed within and contiguously engaging said complete cylindrical shell to prevent expansion of said member (96) when fluid pressure is communicated to the wheel cylinder (52), and said wheel cylinder (52) is solely defined by said member (96) and said torque plate parts (58, 60).

2. A drum brake according to claim 1, characterized in that each matching shell (76) is semi-cylindrical and has semi-circular end walls (78), and outer stiffening flanges (82) extending outwardly.

3. A drum brake according to claim 2, characterized in that said member (96) has ends (100) extending beyond said stiffening flanges (82) and spaced from said stiffening flanges (82).

4. A drum brake according to claim 3, characterized in that sealing boots (102) are mounted on said flanges (100) of said member (96).

5. A drum brake according to claim 1, characterized in that said parts (58, 60) have ears (84) extending outwardly beyond said matching shells (76) for receiving an anchor pin (48).

## Revendications

1. Un frein à tambour muni d'une combinaison de cylindre (52) de frein et de plateau (50) support de couple dans lequel le cylindre (52) de frein est conçu pour recevoir une pression de fluide pendant le freinage pour provoquer le déplacement d'au moins un piston, la combinaison comprenant deux parties (58, 60) de plateau de frein embouties, chaque partie ayant une partie plane centrale (62) conçue pour être fixée à l'autre partie plane et à un carter d'essieu ou analogue, chaque partie ayant l'une de deux coquilles appariées (76) formée en une seule pièce avec elle, ces coquilles formant une enveloppe cylindrique complète lorsqu'elles sont assemblées l'une à l'autre et un organe (96) percé d'un alésage cylindrique traversant (98) monté dans les parties assemblées, caractérisé en ce que ledit organe (96) est fabriqué en matière plastique et est pratiquement enfermé dans ladite enveloppe cylindrique achevée et en appui contigü contre cette enveloppe pour empêcher la dilatation dudit organe (96) lorsqu'une pression de fluide est appliquée au cylindre de frein et ledit cylindre (52) de frein est formé uniquement par ledit organe (96) et par lesdites parties (52, 60) du plateau support de couple.

2. Un frein à tambour selon la revendication 1, caractérisé en ce que chaque coquille appariée (76) est semi-cylindrique et a des parois d'extrémité semi-circulaires (78) et des rebords de renforcement (82) qui s'étendent vers l'extérieur.

3. Un frein à tambour selon la revendication 2, caractérisé en ce que ledit organe (96) a des extrémités (100) qui s'étendent au-delà desdits rebords de renforcement (82) et sont espacées desdits rebords de renforcement (82).

4. Un frein à tambour selon la revendication 3, caractérisé en ce que des manchons d'étanchéité (102) sont montés sur lesdits rebords (100) dudit organe (96).

5. Un frein à tambour selon la revendication 1, caractérisé en ce que lesdites parties (58, 60) comportent des pattes (84) qui s'étendent vers l'extérieur au-delà des coquilles appariées (76) pour recevoir une tige d'ancrage (48).

## Patentansprüche

1. Trommelbremse mit einer Kombination aus einem Radzylinder (52) und einer drehmomentaufnehmenden Platte (50), bei der der Radzylinder (52) während eines Bremsvorganges Strömungsmitteldruck empfangen und eine Bewegung auf mindestens einen Kolben übertragen kann, wobei die Kombination zwei gestanzte Plattenteile (58, 60) für die drehmomentübertragende Platte aufweist, die jeweils einen mittleren ebenen Abschnitt (62) besitzen, der zur Befestigung an dem anderen ebenen Abschnitt und an einem Radachsgehäuse o.ä. dient, und die jeweils des weiteren passende, einstückig damit ausgebildete Hülsenteile (76) aufweisen, die nach ihrem Zusammenbau eine vollständige zylindrische Hülse bilden, und ein in den zusammengebauten Teilen montiertes Element (96), durch das sich eine zylindrische Bohrung (98) erstreckt, dadurch gekennzeichnet, daß das Element (96) aus Kunstoff besteht, von der vollständigen zylindrischen Hülse im wesentlichen umschlossen wird und sich mit dieser in engem Eingriff befindet, um eine Expansion des Elementes (96) zu verhindern, wenn der Radzylinder (52) mit Strömungsmitteldruck beaufschlagt wird, und daß der Radzylinder (52) allein von dem Element (96) und den Teilen (58, 60) der drehmomentübertragenden Platte gebildet ist.

2. Trommelbremse nach Anspruch 1, dadurch gekennzeichnet, daß jeder passende Hülsenteil (76) eine halbzylindrische Form aufweist und halbzylindrische Endwände (78) sowie sich davon nach aussen erstreckende äussere Versteifungsflansche (82) besitzt.

3. Trommelbremse nach Anspruch 2, dadurch gekennzeichnet, daß das Element (96) Enden (100) aufweist, die sich über die Versteifungsflansche (82) hinaus erstrecken und von diesen im Abstand angeordnet sind.

4. Trommelbremse nach Anspruch 3, dadurch gekennzeichnet, daß auf den Flanschen (100) des Elementes (96) Dichtungshauben (102) montiert sind.

5. Trommelbremse nach Anspruch 1, dadurch gekennzeichnet, daß die Teile (58, 60) rohrförmige Abschnitte (84) aufweisen, die sich über die Hülsenteile (76) hinaus erstrecken und zur Aufnahme eines Ankerstiftes (48) dienen.

0 028 989

FIG. 2

FIG. I

**FIG. 3**

FIG. 4

FIG. 5

FIG. 6

3